# FASCICULE DE BREVET EUROPEEN

(11) **EP 1 946 068 B1**
(45) Date de publication et mention de la délivrance du brevet: **14.12.2011**
(21) Numéro de dépôt: 05815026.9
(22) Date de dépôt: 26.10.2005
(51) Int. Cl.: G01M 17/007

(54) **Dispositif de contrôle prenant en compte les quatre roues en rotation d'un véhicule, sa voie et son empattement**
Steuereinrichtung, die die vier sich drehenden Räder eines Fahrzeugs, seine Spurweite und seinen Radstand berücksichtigt
Control device taking into account the four rotating wheels of a vehicle, its gauge and its wheelbase

(43) Date de publication de la demande: 23.07.2008
(73) Titulaire: Polytests Industrie, 13790 Châteauneuf Le Rouge (FR)
(72) Inventeur: Purguette, Edmond, 13790, Châteauneuf Le Rouge (FR); Durand, Claude, 13006 Marseille (FR); La Rocca, Jean-Pierre, 13008 Marseille (FR); L'Helgouarc'h, Alain, 83390 Puget Ville (FR)
(74) Mandataire: Hirsch & Associés
(86) Numéro de dépôt international: PCT/FR2005/002674
(87) Numéro de publication internationale: WO 2007/048882

(56) Documents cités:
- EP-A- 0 124 258
- EP-A- 1 069 399
- EP-A- 1 482 294
- DE-A1- 10 333 762
- DE-C1- 19 529 284
- US-A- 5 111 685
- US-A- 5 231 870
- US-A- 5 269 179
- US-A- 5 335 537
- PATENT ABSTRACTS OF JAPAN vol. 009, no. 040 (P-336), 20 février 1985 (1985-02-20) & JP 59 180447 A (KOGYO GIJUTSUIN; others: 0J), 13 octobre 1984 (1984-10-13)

## Description

La présente invention concerne un dispositif qui permet le passage au banc d'essai de tous les véhicules automobiles équipés ou non d'Electro Stabiliseur Programmé (ESP), roues motrices à l'avant, à l'arrière ou 4X4.

Le secteur technique de l'invention est celui de la mesure d'une distance, d'une vitesse, d'un contrôle de régime moteur, de freinage.

On connaît depuis longtemps des équipements qui permettent de tels contrôles:
- les bancs à rouleaux qui simulent une route, les roues du véhicule à contrôler sont montées sur des rouleaux et tournent sur ces derniers en les entraînant ou en étant entraînées par eux.

Cependant, à moins d'être d'un diamètre important (plusieurs dizaines de centimètres) engendrant des frais considérables lors de l'installation d'un dispositif, les rouleaux provoquent une déformation des pneumatiques néfaste à leur structure.

La faible surface de contact engendre des glissements, la stabilité du véhicule est aléatoire notamment lorsque les roues motrices sont à l'avant.
- les bancs à courroies du type du dispositif breveté NFRE0297007 du 10 juin 1988 permettent grâce à des ensembles poulies-courroies poly V de recevoir les roues motrices en rotation d'un véhicule.

De faible encombrement, ce dispositif assure une incomparable stabilité du véhicule, ne déforme pas la structure métallique des pneumatiques et en raison de l'excellente adhérence entre la surface des pneumatiques et le revêtement des courroies donnent des résultats remarquables au plan de la mesure de distance et de la vitesse.
- Les dispositifs de mesure et de contrôle du type du dispositif breveté France N° 9814511 du 16 novembre 1998 et Europe N° 00927 326.9 du 11 mai 2000 permettent une gestion remarquable des mesures réalisées sur tout type de banc ou sur route. US 5 335 537 cherche à reproduire les conditions d'une route.

Tous les systèmes évoqués ci dessus en l'absence de moyens adaptés, objet de la présente invention ne permettent pas le contrôle de véhicule 4X4 permanent, ni de certains véhicules équipés d'Electro Stabiliseur Programmé (ESP).
- Le premier problème posé est de rendre compatible le banc avec tous les empattements des différents véhicules.
- Le deuxième problème posé est d'entraîner simultanément et à la même vitesse les quatre roues d'un véhicule en marche sur le banc que ce dernier soit à traction, à propulsion ou 4X4.
- Le troisième problème posé est de permettre un débrayage entre l'entraînement du train avant et celui du train arrière. Dans le cas où le véhicule ne nécessite pas pour son contrôle l'entraînement de ses quatre roues.
- Le quatrième problème à résoudre est de rendre indépendant l'entraînement de chacune des quatre roues de sorte que puissent être
- mesurées indépendamment les unes des autres les vitesses de rotation des différentes roues, de pouvoir les comparer entre elles et mesurer les distances converties en impulsions pour l'arrêt définitif en rotation suite à un freinage.

Une solution aux problèmes posés, objet de la présente invention est un dispositif caractérisé en ce qu'il comporte quatre sous ensembles recevant chacun une roue motrice ou non , en rotation reliés entre eux mécaniquement par des transmissions à joints de cardan, des renvois d'angles ou (et) des pompes à engrenages hydrauliques, ou (et) des moteurs électriques asservis de sorte que les roues du véhicule, soit par le moteur propre à ce dernier, soit par au moins un moteur externe , tournent à la même vitesse.

Une solution aux problèmes posés , objet de la présente invention est un dispositif caractérisé en ce qu'il comporte des réglages permettant le rapprochement ou l'éloignement des quatre sous ensembles de sorte que les sous ensembles s'adaptent aux voies et empattements des différents véhicules.

Une autre solution aux problèmes posés, objet de la présente invention est un dispositif caractérisé en ce qu'il comporte au moins un coupleur débrayable entre les deux sous ensembles récepteurs des roues avant du véhicule et les deux sous ensembles récepteurs des roues arrière du véhicule de sorte que lorsque cela est nécessaire, seules les deux roues du train avant ou seules les deux roues du train arrière soient en rotation.

Une autre solution aux problèmes posés, objet de la présente invention est un dispositif caractérisé en ce qu'il comporte un moto-variateur électrique solidairement adapté à chacun des quatre sous ensembles, lesquels entraînent les quatre roues du véhicule moteur allumé, vitesse au point mort, de sorte que lors d'un freinage les quatre moto-variateurs électriques , au moyen de relais cessent d'être alimentés électriquement et que puissent être mesurées et comparées les distances, converties en N impulsions, parcourues avant immobilisation de chacun des sous ensembles.

Le résultat est un nouveau dispositif de mesure et de vérification pour tout véhicule automobile à traction, à propulsion équipé d'ESP ou 4X4.

Une application de ce dispositif est une aide précieuse à la vérification des compteurs horokilométriques , tachymétriques et des limiteurs de vitesse des véhicules automobiles.

Une application de ce dispositif est une aide précieuse au réglage des moteurs des véhicules automobiles.

Une application de ce dispositif est une aide précieuse à la vérification technique des véhicules et notamment du freinage et de la pollution.

La description suivante se réfère aux dessins annexés qui représentent sans aucun caractère limitatif, des exemples de réalisations du dispositif suivant l'invention.

Ces exemples ne sont pas exhaustifs et d'autres dispositions peuvent être envisagées, en particulier, on a représenté :
- Un exemple du dispositif destiné à accueillir les quatre roues d'un véhicule de de sorte que les quatre roues tournent à la même vitesse grâce à des organes d'entraînement mécaniques.
- Un exemple du dispositif avec des organes d'entraînement mécaniques et hydrauliques , mais , les entraînements pourraient tous être hydrauliques. Le dispositif pourrait se voir adjoindre un moteur externe qui permettrait la rotation de tous les sous ensembles sans solliciter le moteur du véhicule .
- Un exemple du dispositif avec des entraînements électriques , mais, les différents types de réalisation et d'entraînement peuvent être combinés entre eux.
- Dans tous ces exemples le nouveau dispositif dispose d'un sous ensemble électro-informatique de gestion connu et non représenté.
- Les sous ensembles destinées à accueillir les roues du véhicule sont représentées' avec des systèmes poulies-courroies mais ils pourrait être composés de simples rouleaux ou d'autres profils de courroies.
- La figure 1 est une vue d'un sous-ensemble poulies-courroies poly-V non revêtu de sa courroie.
- La figure 2 est une vue d'ensemble du dispositif avec les réglages d'empattements et de voies et dont les différents sous ensembles sont reliés entre eux mécaniquement.
- La figure 3 est une vue d'ensemble du dispositif dont les sous-ensembles sont reliés entre eux mécaniquement de la droite à là gauche et hydrauliquement de l'avant à l'arrière.
- La figure 4 est une vue d'un système hydraulique en mode traction (dont le train avant moteur permet d'entraîner le train arrière).
- La figure 5 est une vue du système hydraulique en mode propulsion (dont le train arrière moteur permet d'entraîner le train avant).
- La figure 6 est une vue du système dont les quatre sous ensembles sont entraînés par quatre moto-variateurs électriques asservis.

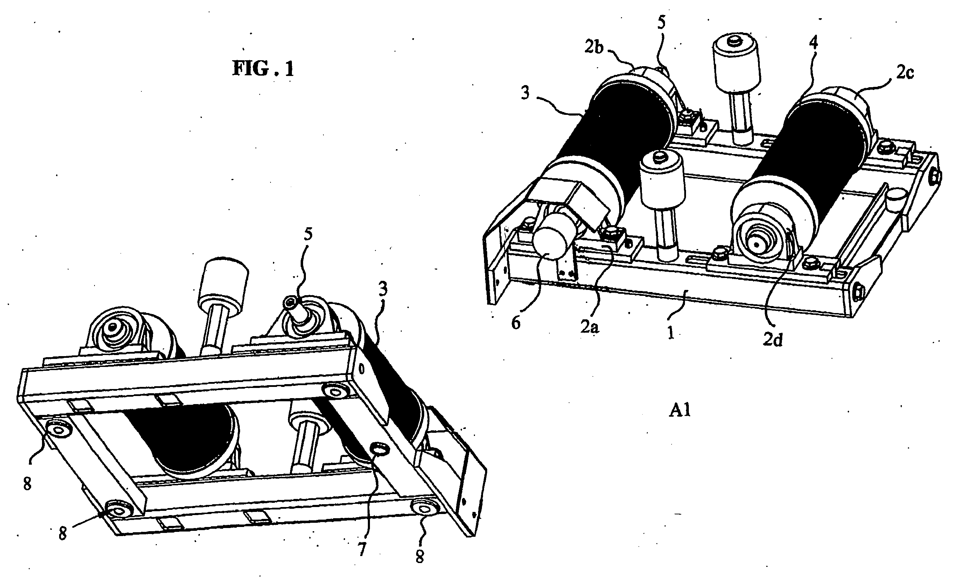

Le sous ensemble (A1) selon la figure 1, destiné à recevoir une roue de véhicule, à être entraînée par elle ou à l'entraîner en rotation comporte : un châssis support (1) porteur de paliers connus (2a), (2b), (2c), (2d) permettant la rotation de 2 poulies poly V , (3) et (4) revêtues d'une courroie poly V non représentée.

La poulie (3) peut être reliée par sa sortie (5) dotée d'une rainure de clavette à tout organe de transmission mécanique, hydraulique ou électrique. La dite poulie (3) est dotée d'un codeur d'impulsions (6) à résolution importante relié à un sous ensemble électro-informatique connu et non représenté permettant le comptage, et la mémorisation du déplacement angulaire de la dite poulie (3).
- La partie inférieure du châssis (1) comporte un trou de guidage (7) d'un axe (7') non représenté autour duquel peut pivoter le sous ensemble (A1) de sorte que la roue et la courroie conservent entre elles une direction commune de mouvement tangentiel assurant une stabilité remarquable. Des billes (8) solidaires du châssis facilitent la rotation du sous ensemble (A1) autour de l'axe non représenté (7').

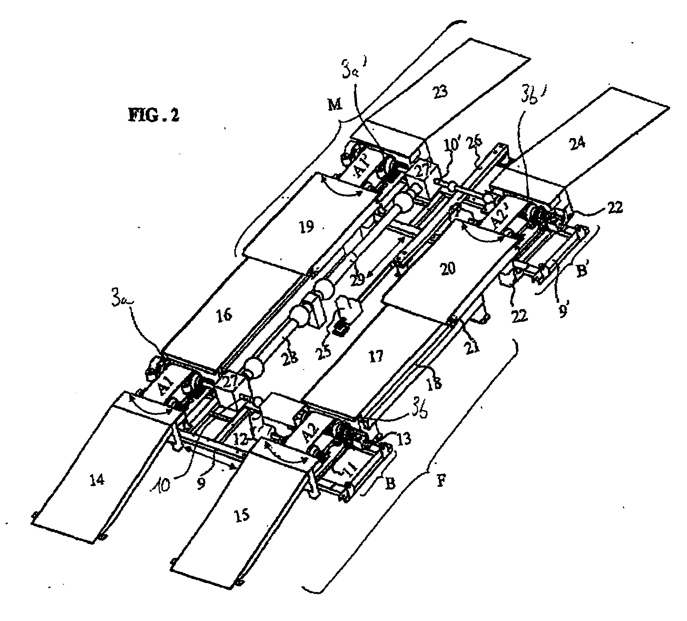

Les quatre sous ensembles (A1), (A2) et (A1'), (A2'),selon la figure 2 sont destinés à recevoir les roues du véhicule.

Les sous ensembles (A1) et (A2) forment un ensemble (B) avec le bâti (9) fixé au sol. Le sous ensemble (A1) est fixe en translation, le sous ensemble (A2) est relié au sous ensemble (A1) par une transmission à joints de cardan (10) télescopique , le sous ensemble (A2) est assujetti à une plaque support (11) qui peut translater et est guidée latéralement sur le bâti (9) par tout moyen connu. Le vérin (12) assujetti d'un coté au bâti (9) et de l'autre à la plaque support (11) permet de rapprocher ou d'éloigner le sous ensemble (A2) du sous ensemble (A1) de sorte que la distance entre les deux sous ensembles (A1) et (A2) puisse être parfaitement ajustée à la voie du véhicule.

Le sous ensemble (A2) comporte sur l'axe extérieur de la poulie (3) un système de freinage ou de blocage (13) permettant l'immobilisation en rotation des systèmes poulies/courroies, et de ce fait autorise le véhicule à quitter le banc.

Les rampes (14) et (15) fixées au sol permettent au véhicule d'accéder au dispositif.

Les pistes (16) et (17) fixées au sol comportent sur les côtés des chemins de roulement (18) sur lesquels translatent les pistes mobiles (19) et (20) dotées chacune de 2 rouleaux (21).

Les dites pistes mobiles sont solidaires du bâti mobile (9') lui-même doté de 8 rouleaux (22) situés de part et d'autre sous les assujettissements des pistes mobiles (19) et (20) au bâti (9') et sous les assujettissements du dit bâti aux rampes mobiles (23) et (24).

Les pistes mobiles (19) et (20), le bâti mobile (9') portant les sous ensembles (A1') et (A2'), les rampes mobiles (23) et (24) forment donc un sous ensemble mobile (M) qui peut être éloigné ou rapproché du sous_ensemble fixe (F) au moyen du vérin (25) ou de tout autre système, de motorisation, chaînes/pignons, pignon/crémaillère... permettant ainsi aux sous ensembles (F) et (M) d'être ajustés à l'empattement du véhicule.

Un guide (26), fixé au sol , assure le maintien dans l'axe du sous ensemble mobile lors de ses déplacements.

Les renvois d'angles (27) et (27') sont solidarisés aux châssis support (1) et (1') de sorte qu'ils puissent suivre les pivotements des sous ensembles (A1) et (A1'). Les arbres traversant des dits renvois d'angles (27) et (27') sont reliés par tout moyen connu aux arbres (5) et (5') et aux transmissions télescopiques à joints de cardan (10) et (10') .

Les arbres renvoyant des dits renvois d'angles (27) et (27') sont reliés entre eux au moyen de deux transmissions à joints de cardan (28) et (29) débrayables et dont l'une au moins est télescopique de sorte que : le mouvement de rotation des systèmes poulies courroies / poly V de l'un des sous ensembles (A1), (A2), (A1'), (A2') entraîne en rotation à la même vitesse les autres sous ensembles supprimant ainsi les effets de différentiel entre les roues gauche et droite et le train avant et le train arrière du véhicule contrôlé.

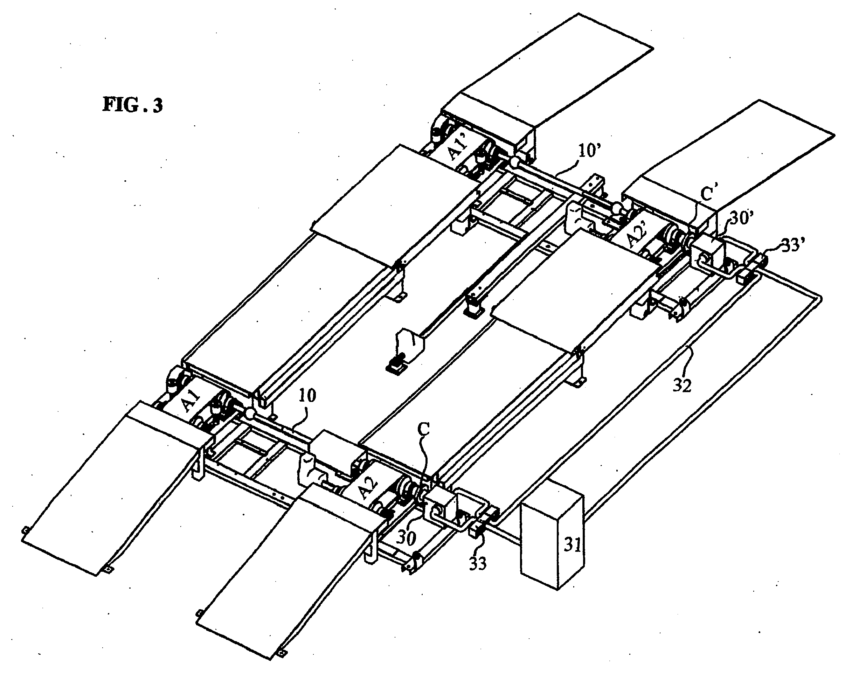

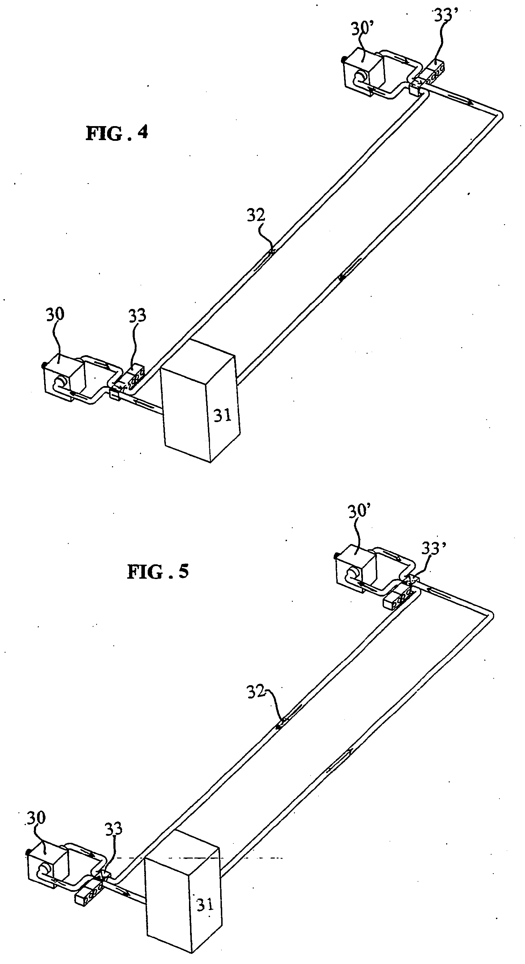

Le même résultat de suppression des effets de différentiel du véhicule contrôlé est obtenu selon les figures 3 et 4 au moyen de deux pompes hydrauliques à engrenages (30) et (30') de même cylindrée, solidarisées aux châssis supports (1) et (1') et reliées aux arbres (5) et (5') de sorte que ; les roues d'un véhicule non représenté , à traction , entraîne en rotation les systèmes poulies-courroie / poly V des sous ensembles (A1') et (A2') reliés entre eux par la transmission à joints de cardan télescopique (10'), que l'arbre (5') du sous ensemble (A2') entraîne à son tour l'arbre de sortie de la pompe à engrenages (30') créant ainsi un mouvement du fluide contenu dans le réservoir (31). Le mouvement du dit fluide actionne les engrenages de la pompe (30) qui entraîne ainsi en rotation les sous ensembles (A1) et (A2) à la même vitesse que les sous ensembles (A1') et (A2') .

Les roues arrière , non motrices , dans le cas de figure décrit sont entraînées à la même vitesse par les roues avant motrices

Le résultat inverse est obtenu selon les figures 3 et 5 lorsqu'un véhicule à propulsion entraîne par ses roues arrière motrices , les roues avant non motrices. Les roues arrière entraînent les systèmes poulies-courroie / poly V des sous ensembles (A1) et (A2) qui entraînent l'arbre de la pompe à engrenages (30), créant le mouvement du fluide. Le dit fluide entraîne à son tour la pompe à engrenages (30') laquelle entraîne ainsi en rotation les sous ensembles (A1') et (A2') à la même vitesse que les sous ensembles (A1) et (A2).

Le fluide contenu dans le réservoir (31) circule dans une canalisation (32) partiellement flexible pour s'adapter aux différents déplacements des parties mobiles du dispositif. Les changements de direction de circulation du fluide , correspondant à différents modes d'entraînement (véhicule à traction ou à propulsion) sont obtenus au moyen de distributeurs régulateurs (33) et (33') pilotés électriquement.

Au moins un coupleur (C) ou (C') débrayable est intercalé entre l'arbre de poulie (5) ou (5') et l'arbre de pompe (30) ou (30') de sorte que , dans le cas d'un véhicule traditionnel ne nécessitant pas pour son contrôle la mise en mouvement de ses deux essieux , seul le train avant ou seul le train arrière soit en mouvement.

Lors du passage sur le dispositif , d'un véhicule 4*4 , les modes traction ou propulsion pourront indifféremment être sélectionnés.

Une réduction du débit du fluide dans la pompe à engrenages motrice (30) ou (30'), , obtenu au moyen des distributeurs régulateurs (33) et (33') permettra d'infliger un couple résistant quantifié , aux roues motrices du véhicule , de sorte que , puisse être simulée une montée et que des contrôles de pollution en charge , des réglages de carburation et allumage puissent être opérés en faisant ainsi l'économie du traditionnel essai routier après intervention.

Un mode blocage , suivant la figure 3 , ferme la circulation du fluide dans les pompes (30) et (30') interdisant la rotation des engrenages des dites pompes , de sorte que , le véhicule puisse quitter le banc après son contrôle.

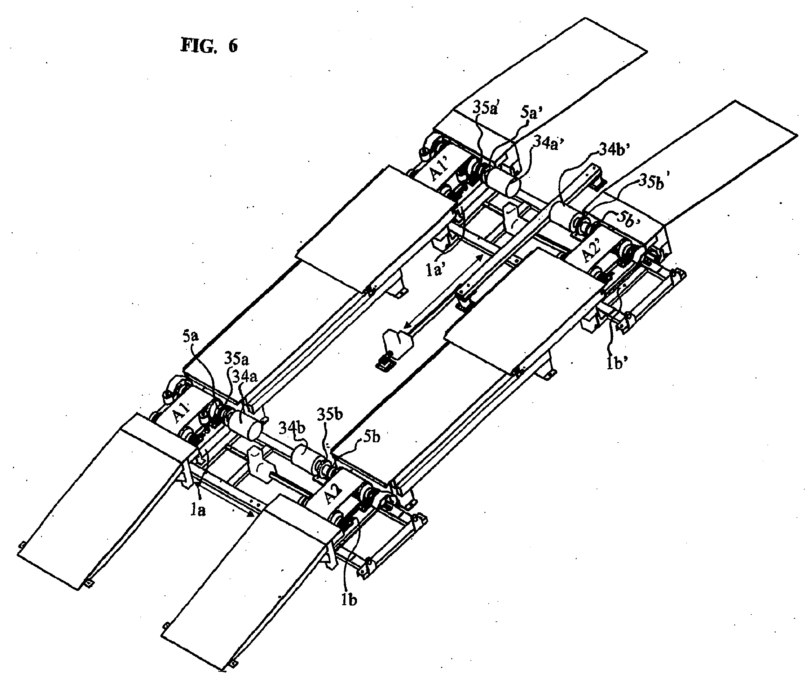

Le même résultat visant à faire tourner les quatre roues d'un véhicule contrôlé à la même vitesse , est obtenu selon la figure 6 , au moyen de quatre moto-variateurs de vitesse de mêmes caractéristiques et asservis (34a), (34b), (34a'), (34b') supportés par des platines non représentées . Les dites platines sont solidarisés aux châssis supports (1a), (1b), (1a'), (1b') par tout moyen connu..

Les arbres des moto-variateurs sont reliés aux arbres (5a), (5b), (5a'), (5b') aux moyens d'accouplements connus de sorte que les roues d'un véhicule , moteur en marche , vitesse au point mort , puissent être entraînées par les sous ensembles (A1) , (A2) et (A1'), (A2') en rotation à la même vitesse.

Les arbres (5a), (5b) et (5a'), (5b') sont dotés de couple-mètres (35a), (35b), (35a') , (35b') connus et de mêmes caractéristiques , de sorte que : les couples résistants infligés à chacun des arbres puissent être mesurés , comparés entre eux , enregistrés et imprimés au moyen de l'ensemble électro-informatique de gestion connu non représenté

Lors du contrôle , le démarrage des quatre moto-variateurs est déclenché par l'opérateur, lorsque la vitesse souhaitée des quatre moto-variateurs est atteinte , l'opérateur sollicite le système de freinage . Les couple-mètres détectent l'augmentation des couples résistants transmettent l'information au sous ensemble électro-informatique qui déclenche les opérations de mesure des couples et de comptage des codeurs (6a), (6b) et (6a'), (6b') de sorte que outre , la comparaison des couples de freinage à gauche et à droite sur les trains avant et arrière , puisse être mesurée la distance nécessaire à l'immobilisation totale du dispositif et des roues du véhicule , en prenant en compte la vitesse nominale des moto-variateurs et le poids du dit véhicule.

Lors du freinage , les moto-variateurs continuent d'entraîner en rotation les sous ensembles (A1), (A2), (A1') et (A2') simulant ainsi l'inertie paramétrée du véhicule jusqu'à ce que , la vitesse décroissant et les couples résistants augmentant très rapidement , un relais coupe l'alimentation des moto-variateurs de sorte que , le couple résistant limite au delà duquel les roues du véhicule quittent le dispositif , ne soit pas atteint.

## Revendications

1. Dispositif de contrôle, de réglage et de mesure des roues d'un véhicule automobile, comportant :
- quatre sous-ensembles (A1, A2, A1', A2')destinés à recevoir les quatre roues en rotation du véhicule,
- des pistes (16, 17, 19, 20) et rampes descendantes (23, 24) et montantes (14, 15) de mise en place des roues du véhicule sur les dits sous-ensembles (A1, A2, A1', A2'), chacune des rampes (14, 15, 23, 24) pouvant être associés à un sous-ensemble (A1, A2, A1', A2') de sorte qu'il peut être défini une première paire de sous-ensembles (A1, A2) pour les deux sous-ensembles (A1, A2) associés aux rampes montantes (14, 15) et une deuxième paire de sous-ensembles (A1', A2') pour les deux sous-ensembles (A1', A2') associés aux rampes descendantes (23, 24),
- un sous-ensemble électro-informatique gestionnaire d'informations provenant des sous-ensembles (A1, A2, A1', A2'),
chaque sous-ensemble (A1, A2, A1', A2') comportant un châssis support (1), porteur de paliers (2a, 2b, 2a', 2b') qui permettent la rotation de deux rouleaux ou deux poulies (3, 4) revêtues d'une courroie de même profil ou dessin que les dites poulies, le châssis respectif (1), porté par un bâti fixe (9) ou respectivement mobile (9'), comportant un trou de guidage (7) du sous-ensemble (A1, A2, A1' ,A2') autour d'un axe pivot respectif et comportant des billes (8) pour faciliter le pivotement du sous-ensemble considéré (A1, A2, A1', A2') autour de l'axe associé,
le dispositif comportant en outre
- un premier renvoi d'angle (27),
- une transmission télescopique à joints de cardan de liaison (10) entre des arbres de sortie des poulies ou rouleaux (3a, 3b) d'une première paire de dits sous-ensembles (A1, A2),
- un second renvoi d'angle (27') de mêmes caractéristiques que le premier renvoi d'angle (27),
- une transmission télescopique à joints de cardan de liaison (10') entre des arbres de sortie des poulies ou rouleaux (3a', 3b') d'une second paire des dits sous-ensembles (A1', A2'), et
- deux transmissions télescopiques à joints de cardan de liaison débrayables (28, 29) entre des arbres renvoyant des renvois d'angles (27, 27'), lesdits renvois d'angles (27, 27') étant reliés aux arbres de sortie des poulies ou rouleaux et aux transmissions télescopiques à joints de cardan (10, 10').

2. Dispositif selon la revendication 1, comportant, de part et d'autre du bâti (9) fixe au sol et porteur de la première paire de sous-ensemble (A1, A2), des rampes d'accès fixes au sol (14 ,15), des pistes fixes au sol (16, 17) dotées chacune de chemins de roulement (18) sur lesquels se translatent les pistes mobiles (19, 20) dotées de rouleaux (21) et solidaires du bâti mobile sur le sol (9') porteur de la seconde paire de sous-ensembles (A1', A2') et doté lui-même de rouleaux de translation (22), le bâti mobile (9') étant solidaire des rampes de descente mobiles (23, 24), et une motorisation (25) et un guide de translation (26) permettent d'éloigner ou de rapprocher le bâti mobile (9') du bâti fixe (9) .

3. Dispositif selon l'une des revendications 1 ou 2, comportant deux sous-ensembles (A1 ,A1') fixes en translation latérale sur le bâti fixe (9) et sur le bâti mobile (9') et deux sous-ensembles (A2, A2') mobiles latéralement sur le bâti fixe (9) et sur le bâti mobile (9'), ainsi que deux motorisations (12, 12') qui permettent de rapprocher ou d'éloigner les sous-ensembles mobiles (A2, A2') des sous-ensembles fixes(A1, A1').

4. Dispositif selon l'une des revendications 1 à 3, comportant des codeurs d'impulsions à grande résolution (6a, 6b, 6a', 6b'), des couple-mètres(35a, 35b, 35a', 35b'), des coupleurs débrayables (C, C'), des freins ou bloqueurs (13), des distributeurs régulateurs (33, 33'), montés solidairement sur les arbres de sortie des poulies ou rouleaux (3a, 3b, 3a', 3b') des sous-ensembles (A1, A2, A1', A2'), deux motorisations d'ajustement à la voie (12, 12'), une motorisation d'ajustement à l'empattement (25) , tous ces différents éléments étant reliés au sous-ensemble électro-informatique de gestion par des câbles de connexion.

5. Dispositif selon l'une des revendications 1 ou 4, comportant des moto-variateurs (34a, 34b, 34a', 34b') de mêmes caractéristiques, asservis et régulés dont les arbres sont reliés aux arbres de sortie des poulies (3a, 3b, 3a', 3b') dotés de codeurs (6a, 6b, 6a', 6b') et de couple-mètres (35a, 35b, 35a', 35b') .

6. Dispositif selon la revendication 5, adapté à cesser l'alimentation électrique des moto-variateurs (34a, 34b, 34a', 34b') au moyen de relais, juste avant qu'un couple limite résistant, qui ferait sortir le véhicule du dispositif, ne soit atteint lors d'un freinage.

7. Dispositif selon l'une des revendications précédentes, la partie inférieure du châssis comportant le trou (7) de guidage d'un axe pivot du sous-ensemble (A1, A2, A1', A2') de sorte que la roue et la courroie conservent entre elles une direction commune de mouvement tangentiel.

## Claims

1. Apparatus for checking, adjusting and measuring the wheels of an automobile vehicle, comprising:
- four subassemblies (A1, A2, A1', A2') designed to receive the four rotating wheels of the vehicle,
- tracks (16, 17, 19, 20) and descending (23, 24) and rising (14, 15) ramps for putting the wheels of the vehicle in place on said subassemblies (A1, A2, A1', A2'), each one of the ramps (14, 15, 23, 24) being able to be associated with a subassembly (A1, A2, A1', A2') allowing a first pair of subassemblies (A1, A2) to be defined for the two subassemblies (A1, A2) associated with the rising ramps (14, 15) and a second pair of subassemblies (A1', A2') to be defined for the two subassemblies (A1', A2') associated with the descending ramps (23, 24),
- an electronics and computing subassembly for managing information originating from said subassemblies (A1, A2, A1', A2'),
each of said subassemblies (A1, A2, A1', A2') including a support chassis (1), carrying bearings (2a, 2b, 2a', 2b') allowing rotation of two rollers or two pulleys (3, 4) carrying a belt of the same profile or pattern as the said pulleys, the respective chassis (1), carried by a fixed (9) or, respectively, movable (9') frame including a guide hole (7) for the subassembly (A1, A2, A1', A2') about a respective pivoting axis and including balls (8) for facilitating pivoting of the relevant subassembly (A1, A2, A1', A2') about the associated axis,
the apparatus further comprising
- a first bevel gear (27),
- a telescopic transmission with connecting universal joints (10) between the output shafts of the pulleys or rollers (3a, 3b) of a first pair of said subassemblies (A1, A2),
- a second bevel gear (27') having the same characteristics as the first bevel gear (27),
- a telescopic transmission with connecting universal joints (10') between the output shafts of the pulleys or rollers (3a', 3b') of a second pair of said subassemblies (A1', A2'), and
- two telescopic transmissions with disengageable universal connecting joints (28, 29) between the direction-changing shafts of the bevel gears (27, 27'), said bevel gears (27, 27') being connected to the output shafts of the pulleys or rollers and to the telescopic transmissions having universal joints (10, 10').

2. The apparatus of claim 1, comprising, on either side of the frame (9) fixed to the ground and carrying the first pair of subassemblies (A1, A2), access ramps fixed to the ground (14, 15), tracks fixed to the ground (16, 17) each with raceways (18) on which the movable tracks (19, 20) perform translatory movement equipped with rollers (21) and integral with the frame movable over the ground (9') carrying the second pair of subassemblies (A1', A2') and itself provided with rollers for translatory movement (22), the movable frame (9') being integral with the movable descent ramps (23, 24), and motor means (25) and translatory guiding means (26) allowing the movable frame (9') to be moved away from or brought closer to the fixed frame (9).

3. The apparatus according to one of claims 1 or 2, having two subassemblies (A1, A1') fixed in lateral translatory movement on the fixed frame (9) and on the movable frame (9') and two subassemblies (A2, A2') movable laterally on the fixed frame (9) and on the movable frame (9'), as well as two motor means (12, 12') allowing the movable subassemblies (A2, A2') to be brought closer to or moved away from the fixed subassemblies (A1, A1').

4. The apparatus according to one of claims 1 to 3, with high-resolution pulse encoders (6a, 6b, 6a', 6b'), torque-meters (35a, 35b, 35a', 35b'), disengageable coupling means (C, C'), brakes or blocking means (13), regulating distributors (33, 33'), integrally mounted on the shafts of the pulleys or rollers (3a, 3b, 3a', ', 3b') of the subassemblies (A1, A2, A1 ', A2'), two motor means for adjusting wheel track (12, 12 '), motor means for adjusting wheelbase (25), all these various components being connected to the management electronics and computing subassembly by connecting cables.

5. The apparatus according to one of claim 1 or 4, including variable speed gears (34a, 34b, 34a', 34b') having the same characteristics, slaved and controlled, the shafts of which are connected to the output shafts of the pulleys (3a, 3b, 3a ', 3b') provided with encoders (6a, 6b, 6a', ', 6b') and torque-meters (35a, 35b, 35a', 35b').

6. The apparatus of claim 5, adapted to stop the power supply of the variable speed gears (34a, 34b, 34a', 34b') by means of relays, just prior to a resisting limiting torque which would have the effect of causing the vehicle to leave the apparatus, is reached on the occasion of braking.

7. The apparatus according to one of the preceding claims, the lower portion of the chassis including a hole (7) for guiding a pivot axis of the subassembly (A1, A2, A1 ', A2') so that the wheel and the belt mutually maintain a common direction of tangential motion.

## Patentansprüche

1. Vorrichtung zum Steuern, Einstellen und Messen der Räder eines Kraftfahrzeugs, Folgendes aufweisend:
- vier Unterbaugruppen (A1, A2, A1', A2'), die dazu bestimmt sind, die vier Räder in Drehung des Fahrzeugs aufzunehmen,
- Spuren (16, 17, 19, 20) und absteigende (23, 24) und aufsteigende Rampen (14, 15) zum Anbringen der Räder des Fahrzeugs auf den Unterbaugruppen (A1, A2, A1', A2'), wobei jede der Rampen (14, 15, 23, 24) mit einer Unterbaugruppe (A1, A2, A1', A2') derart verbunden werden kann, dass ein erstes Paar Unterbaugruppen (A1, A2) für die zwei Unterbaugruppen (A1, A2), die zu den aufsteigenden Rampen (14, 15) gehören, und ein zweites Paar Unterbaugruppen (A1', A2') für die zwei Unterbaugruppen (A1', A2'), die zu den absteigenden Rampen (23, 24) gehören, definiert werden können,
- eine elektrisch-informatische Unterbaugruppe zur Verwaltung von Informationen, die von den Unterbaugruppen (A1, A2, A1', A2') kommen,
wobei jede Unterbaugruppe (A1, A2, A1', A2') ein Tragchassis (1) aufweist, das Lager (2a, 2b, 2a', 2b') trägt, die das Drehen von zwei Rollen oder zwei Scheiben (3, 4) erlauben, die mit einem Riemen mit gleichem Profil oder mit gleichem Muster wie die Scheiben belegt sind, wobei das jeweilige Chassis (1), das von einem jeweils stationären (9) oder beweglichen Rahmen (9') getragen wird, eine Führungsbohrung (7) der Unterbaugruppe (A1, A2, A1', A2') um eine jeweilige Schwenkachse aufweist und Kugeln (8) aufweist, um das Schwenken der betreffenden Unterbaugruppe (A1, A2, A1', A2') um die dazugehörende Achse zu erleichtern,
wobei die Vorrichtung ferner
- eine erste Umlenkung (27),
- eine teleskopische Übertragung mit Verbindungskardangelenken (10) zwischen Abtriebswellen der Scheiben oder Rollen (3a, 3b) eines Paars von Unterbaugruppen (A1, A2),
- eine zweite Umlenkung (27') mit gleichen Merkmalen wie die erste Umlenkung (27),
- eine teleskopische Übertragung mit Verbindungskardangelenken (10') zwischen Abtriebswellen der Scheiben oder Rollen (3a', 3b') eines zweiten Paars der Unterbaugruppen (A1', A2'), und
- zwei teleskopische Übertragungen mit ausrückbaren Verbindungskardangelenken (28, 29) zwischen Wellen, die die Umlenkungen (27, 27') umlenken, wobei die Umlenkungen (27, 27') mit den Abtriebswellen der Scheiben oder Rollen und den teleskopischen Übertragungen mit Kardangelenken (10, 10') verbunden sind.

2. Vorrichtung nach Anspruch 1, die zu beiden Seiten des stationären Rahmens (9) auf dem Boden und der das erste Paar Unterbaugruppen (A1, A2) trägt, stationäre Zugangsrampen auf dem Boden (14, 15) stationäre Spuren auf dem Boden (16, 17), die jeweils mit Rollbahnen (18) versehen sind, auf welchen die beweglichen Spuren (19, 20) laufen, die mit Rollen (21) versehen und mit dem beweglichen Rahmen auf dem Boden (9') der das zweite Paar Unterbaugruppen (A1', A2') trägt, und der selbst mit Verschiebungsrollen (22) versehen ist, verbunden sind, wobei der Rahmen (9') mit beweglichen Abstiegsrampen (23, 24) fest verbunden ist, und ein Antrieb (25) und ein Verschiebungsführer (26) erlauben es, den beweglichen Rahmen (9') dem stationären Rahmen (9) zu nähern oder von ihm zu beabstanden.

3. Vorrichtung nach einem der Ansprüche 1 oder 2, die zwei Unterbaugruppen (A1, A1') aufweist, die in seitlicher Verschiebung auf dem stationären Rahmen (9) und auf dem beweglichen Rahmen (9') stationär sind, und zwei Unterbaugruppen (A2, A2'), die auf dem stationären Rahmen (9) und auf dem beweglichen Rahmen (9') seitlich beweglich sind, sowie zwei Antriebe (12, 12'), die es erlauben, die beweglichen Unterbaugruppen (A2, A2') der stationären Unterbaugruppen (A1, A1') zu nähern oder zu beabstanden.

4. Vorrichtung nach einem der Ansprüche 1 bis 3, die Impulscodierer mit großer Auflösung (6a, 6b, 6a', 6b'), Drehmomentanzeiger (35a, 35b, 35a', 35b'), ausrückbare Kuppler (C, C'), Bremsen oder Blockierer (13), Verteiler-Regler (33, 33'), die fest auf die Abtriebswellen der Scheiben oder Rollen (3a, 3b, 3a', 3b') der Unterbaugruppen (A1, A2, A1', A2') montiert sind, zwei Antriebe zum Justieren auf die Spurweite (12, 12'), einen Antrieb zum Justieren auf den Radstand (25) aufweist, wobei alle diese verschiedenen Elemente mit der elektrisch-informatischen Unterbaugruppe zur Verwaltung durch Verbindungskabel verbunden sind.

5. Vorrichtung nach einem der Ansprüche 1 oder 4, die Drehzahlwandler (34a, 34b, 34a', 34b') mit gleichen Merkmalen, die gesteuert und geregelt sind, deren Wellen mit den Abtriebswellen der Scheiben (3a, 3b, 3a', 3b') verbunden sind, die mit Codierern (6a, 6b, 6a', 6b') und Drehmomentanzeigern (35a, 35b, 35a', 35b') versehen sind, aufweist.

6. Vorrichtung nach Anspruch 5, die die Stromversorgung der Drehzahlwandler (34a, 34b, 34a', 34b') mit Relais unterbrechen kann, kurz bevor bei einem Bremsen ein Grenzwiderstandsmoment, der das Fahrzeug aus der Vorrichtung austreten lassen würde, erreicht wird.

7. Vorrichtung nach einem der vorhergehenden Ansprüche, wobei der untere Teil des Chassis die Führungsbohrung (7) einer Schwenkachse der Unterbaugruppe (A1, A2, A1', A2') derart aufweist, dass das Rad und der Riemen untereinander eine gemeinsame tangentiale Bewegungsrichtung behalten.
